Europäisches Patentamt

European Patent Office

Office européen des brevets

(19)

(11) Veröffentlichungsnummer : **0 489 694 A1**

(12) **EUROPÄISCHE PATENTANMELDUNG**

(21) Anmeldenummer : 91810933.1

(22) Anmeldetag : 02.12.91

(51) Int. Cl.⁵ : **B65G 15/34**, F16G 1/16

(30) Priorität : 05.12.90 CH 3850/90

(43) Veröffentlichungstag der Anmeldung :
10.06.92 Patentblatt 92/24

(84) Benannte Vertragsstaaten :
**DE ES FR GB IT NL**

(71) Anmelder : **Habasit AG**
**Römerstrasse 1**
**CH-4153 Reinach (CH)**

(72) Erfinder : **Gubler, Hans Rudolf**
**Brügglimattweg 13**
**CH-4226 Breitenbach (CH)**
Erfinder : **Habegger, Fernand**
**Langgartenstrasse 45**
**CH-4105 Biel-Benken (CH)**

(74) Vertreter : **Eschmann, Heinz et al**
**A. Braun, Braun, Héritier, Eschmann AG**
**Patentanwälte Holbeinstrasse 36-38**
**CH-4051 Basel (CH)**

(54) **Prozessband.**

(57)    Das Prozessband ist in mehrere Lagen (1-4) mit jeweils lagenspezifischer Funktion unterteilt. So nimmt der Zugträger (1) praktisch die gesamte Zuglast auf, während die Verbesserung der Quersteifigkeit einem im Abstand vom Zugträger (1) angeordneten Fadengelege (3) obliegt.
    Das Ergebnis dieser Anordnung sind ausgezeichnete Laufeigenschaften wie Quersteifigkeit, Längsbiegsamkeit, Flachlage sowie grössere Freiheit in der Abstimmung der entscheidenden Festigkeitsparameter.

FIG. 2

EP 0 489 694 A1

Die vorliegende Erfindung betrifft ein Prozessband gemäss dem Oberbegriff des unabhängigen Patentanspruchs 1.

Derartige Prozessbänder werden vorzugsweise für automatische Arbeitsvorgänge, insbesondere auch als sogenannte Druckdecke in der Textilindustrie eingesetzt, und zwar als Druckunterlage in Flachdruck-, Rotationsdruck-, Rouleaudruckmaschinen und dergleichen.

Bei diesen spezialisierten Anwendungen werden höchste Anforderungen an die Laufeigenschaften sowie an die geometrische Genauigkeit gestellt, um eine gleichbleibende Bandgeschwindigkeit zu garantieren bzw. um Rapportungenauigkeiten während des Druckprozesses zu verhindern. Aus diesem Grund muss das Prozessband in Längsrichtung eine möglichst geringe bzw. gleichmässige Elastizität aufweisen sowie schlupffrei und ohne seitlichen Versatz laufen. Ausserdem wird je nach Einsatz eine glatte oder strukturierte, abriebfeste Oberfläche und eine hohe Chemikalienbeständigkeit verlangt.

Wichtig ist ferner, dass sich solche Prozessbänder durch absolute Flachlage auszeichnen und über kleine Trommeldurchmesser laufen können. Vorzugsweise sollen sie in der Maschine endverbunden oder repariert werden können, damit bei der Montage derselben der aufwendige Arbeitsvorgang für Ausbau und Zerlegung der Maschine entfällt. Dies trifft zum Beispiel auf alle Transportbänder zu, die in einem Wickelverfahren endlos hergestellt werden.

Die auf dem Markt bekannten Transportbänder weisen einen genormten, handelsüblichen Aufbau auf. So werden sowohl zur Anpassung an die geforderte Zugbeanspruchung in Längsrichtung als auch an die Steifigkeit in Querrichtung mehrere Gewebelagen übereinander angeordnet und anschliessend auf Kalandern, Pressen oder dergleichen zu einem Schichtkörper vereinigt. Dieser Verarbeitungsprozess hat zwangsläufig den Nachteil, dass die Spannungs- und Dehnungsverhältnisse der einzelnen Lagen zueinander im Schichtverbund nicht beherrschbar sind; grosse Schwankungen in der neutralen Biegeebene sind die Folge. Ausserdem führen Transportbänder dieser Art wegen ihrer grösseren Dicke zu Nachteilen im Biegebereich, wie erhöhte Längssteifigkeit und grössere Trommeldurchmesser, aber auch zu vorzeitiger Ermüdung und Schichtentrennung unter dynamischer Belastung.

Bei diesen Förderbändern besteht der Zugträger somit gemäss der konventionellen Technik aus mehreren Gewebelagen, deren Kettfäden die Zugkräfte übertragen, während die Quersteifigkeit des Bandes - und damit auch dessen Flachlage - von den Schussfäden gewährleistet wird.

Für Anwendungsfälle mit hoher Zugbeanspruchung werden daher Bänder mit zwei oder mehr übereinanderliegenden Gewebelagen verwendet, was den Bändern zwangsläufig eine unerwünschte Dicke und "Brettigkeit" verleiht und sich auf die Laufeigenschaften ungünstig auswirkt. Der Forderung nach hoher Zugkraftübertragung steht somit das Kriterium der Banddicke und der Längssteifigkeit gegenüber, so dass man bestrebt ist, bei möglich begrenzter Zahl der Gewebelagen eine optimale Zugkraftübertragung zu realisieren, wobei bisher stets von der Annahme ausgegangen wurde, dass das als Zugkraftüberträger dienende Gewebe gleichzeitig auch die Quersteifigkeit gewährleisten müsse.

In der europäischen Patentanmeldung 380 971 ist ein Transportband beschrieben, das als Festigkeitsträger ein aus Ober- und Untergewebe zusammengesetztes Doppelpolgewebe aufweist, dessen an den Schussfäden abgebundene Polfäden die beiden Gewebe zu einer zugfesten Einheit zusammenhalten sollen. Da hier die beiden Kettsysteme eng aufeinanderliegen, besteht die Gefahr, dass sich bei höheren Zugspannungen . eine Querkontraktion mit Verwölbungstendenz ergibt, zumal die beiden Kettfadensysteme Relativbewegungen ausführen können und damit unterschiedlich auf die auftretenden Zugspannungen reagieren.

Durch die Vermengung der die Längs- und Querbeanspruchungen aufnehmenden Elemente in einer Schicht ist es ferner schwierig, ja unmöglich, die Spannungs-, Dehnungs- und Biegecharakteristik sowie die Quersteifigkeit voneinander unabhängig und mit mathematischer Genauigkeit festzulegen, was für zahlreiche Anwendungsfälle von grosser Bedeutung wäre, bisher aber in dem gewünschten Ausmasse nicht realisiert werden konnte.

Es ist daher die Aufgabe der vorliegenden Erfindung, ein Prozessband der eingangs definierten Art vorzuschlagen, das die vorerwähnten Nachteile der bekannten Bänder nicht aufweist und sich insbesondere durch optimale Laufeigenschaften und Anpassbarkeit derselben an jeden praktischen Bedarfsfall auszeichnet.

Diese Aufgabe wird gelöst durch die im kennzeichnenden Teil des unabhängigen Patentanspruchs definierte Erfindung.

Die beiliegende Zeichnung zeigt Ausführungsbeispiele des erfindungsgemässen Prozessbandes, die nachstehend beschrieben werden.

Es zeigen:

Fig. 1 einen Längsschnitt einer ersten Ausführungsform der Erfindung,

Fig. 2 eine gleichartige Darstellung einer Variante,

Fig. 3 eine aufgeschnittene Perspektive einer weiteren Ausführungsform,

Fig. 4 eine Draufsicht auf einen Ausschnitt eines Drehergeleges und

Fig. 5 eine zu Vergleichsversuchen verwendete Prüfanordnung.

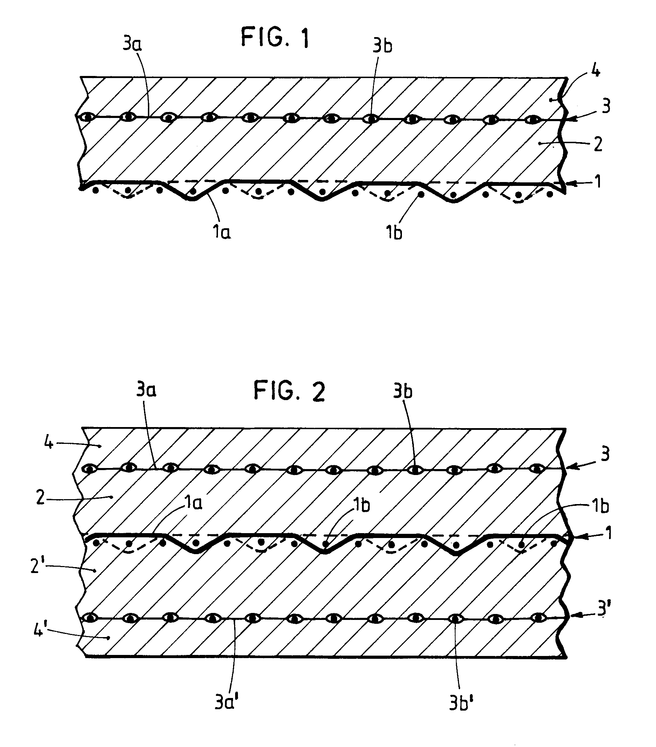

Gemäss Figur 1 ist als unterste Schicht eine Gewebelage 1 vorgesehen, deren praktisch ausschliesslich zur Uebertragung der auftretenden Zugkräfte dienende Kettfäden 1a einen E-Modul zwischen 10'000 und 250'000 N/mm² aufweisen.

Damit ist die Funktion dieser Gewebelage 1 als typischer Zugkraftüberträger gekennzeichnet. Die erforderliche Quersteifigkeit des Prozessbandes wird dagegen von einem sogenannten Drehergelege 3 gewährleistet, einem weitmaschigen Verbundgewebe aus relativ feinen Kettfäden, die einen geringen E-Modul besitzen, während der E-Modul der betreffenden Schussfäden hier zwischen 10'000 und 250'000 N/mm² liegen sollte. Das Drehergelege 3 nimmt somit an der Zugkraftübertragung praktisch nicht teil.

Gemäss einer bevorzugten Ausführungsform sollte die bei Längsdehnung resultierende Kraft pro Breiteneinheit des Drehergeleges 3 im Maximum 5% von derjenigen der als Zugträger dienenden Gewebelage 1 betragen.

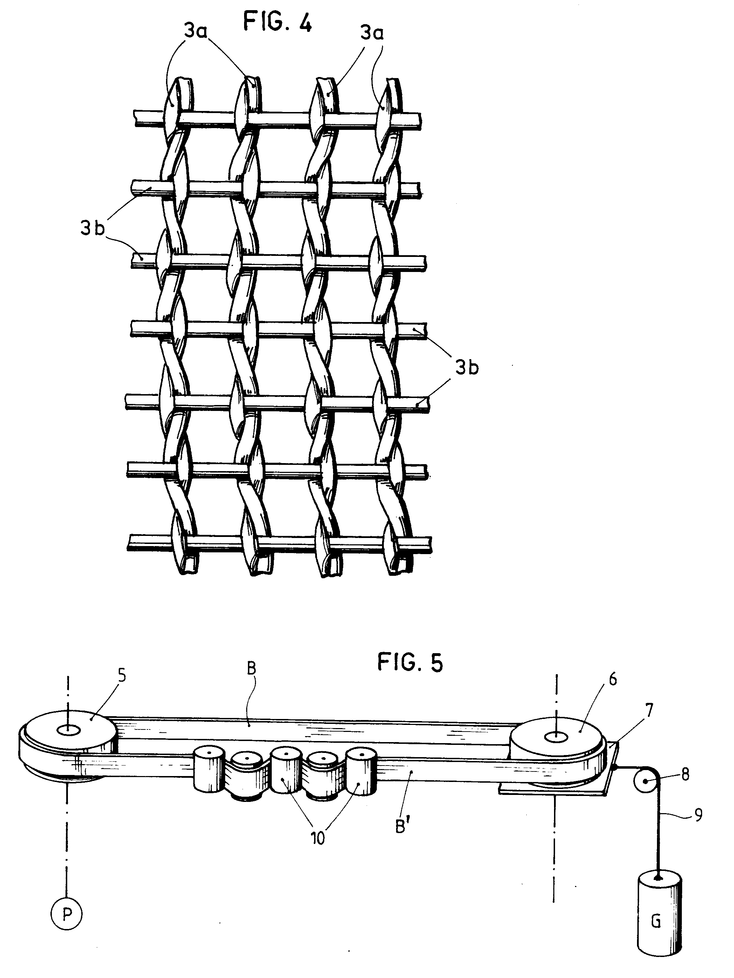

Die Struktur des Drehergeleges 3 ist dem Textilfachmann bekannt. Um Missverständnissen vorzubeugen, ist ein Ausschnitt eines solchen Drehergeleges in der Draufsicht nach Fig. 4 dargestellt. Man erkennt die in diesem Prozessbandelement entscheidenden Monofil-Schussfäden 3b, die jeweils von den miteinander verdrehten und die Schussfäden umschlingenden Multifil-Kettfäden 3a fixiert werden. Hier haben die Kettfäden 3a somit eine reine Hilfsfunktion, nämlich die Halterung der Schussfäden 3b, welchen ihrerseits die Hauptfunktion - die Verbesserung der Quersteifigkeit - zukommt. Das Drehergelege sollte vorzugsweise mindestens die 2-fache Maschenweite des Zugträgers aufweisen.

Das Drehergelege 3 ist von dem als Zugkraftüberträger dienenden Gewebe 1 durch eine Zwischenlage 2 getrennt, die beispielsweise aus "PUR weich" bestehen kann. Aus dem gleichen Werkstoff kann auch die Schutz- und Deckschicht 4 sein.

Diese beiden, vorzugsweise aus thermoplastischen Elastomeren bestehenden Schichten bilden bei der praktischen Ausführung des Prozessbandes zwangsläufig eine homogene Masse, in welche das Drehergelege 3 eingebettet ist. Dabei kann die Dicke der Zwischenschicht, die einen der die Quersteifigkeit des Prozessbandes bestimmenden Parameter darstellt, je nach Bedarfsfall gewählt werden.

Bei der Ausführungsform nach Figur 2 ist die zur praktisch ausschliesslichen Zugkraftübertragung dienende Gewebeschicht 1 zentral angeordnet, während sich die anderen, wie in Figur 1 bezeichneten Lagen symmetrisch beidseitig anschliessen. Demgemäss ist auch bei dieser Ausführungsform wiederum nur ein einziger Zugträger, d.h. die aus zugbelastbaren Kettfäden 1a und diese fixierenden Schussfäden 1b bestehende Gewebelage 1, vorgesehen. An diese schliesst sich einerseits eine erste Zwischenlage 2, andererseits eine zweite Zwischenlage 2' an. Die Zwischenlagen 2 und 2' haben zwar auch hier eine von den Schutz- und Deckschichten 4 bzw. 4' abweichende Funktion, verschmelzen aber mit denselben und sind lediglich durch die beiden in deren Masse eingebetteten Drehergelegen 3 bzw. 3' voneinander unterschieden.

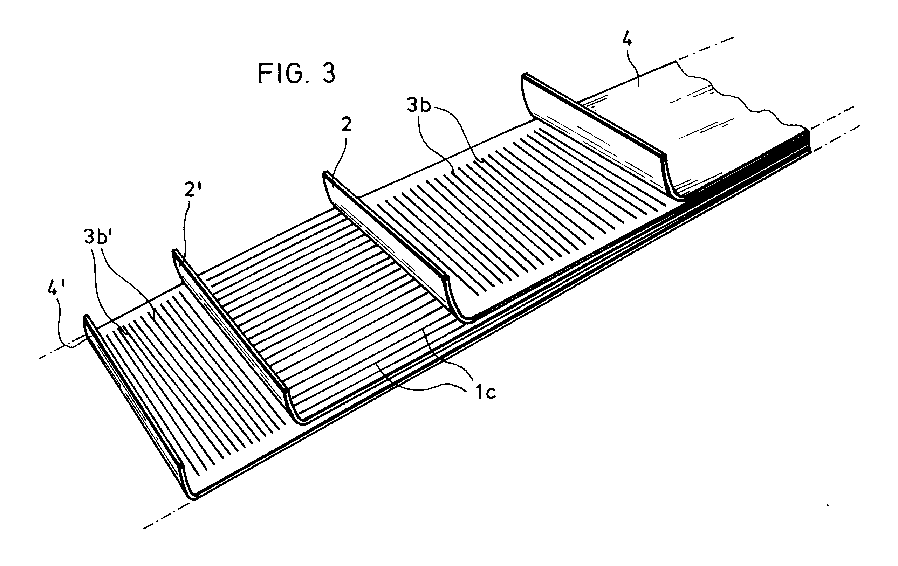

Eine weitere Ausführungsform des erfindungsgemässen Prozessbandes zeigt Fig. 3. Als Zugträger 1 wird hier nicht ein gewobenes oder gewirktes Zugband verwendet, sondern hier sind in das Material der beiden Zwischenlagen 2 und 2' ausschliesslich Multifilfäden 1c hoher Zugfestigkeit eingebettet, deren Werkstoff und Vorbehandlung mit dem Material der Zwischenlagen 2 und 2' so abgestimmt sind, dass sich eine ausgezeichnete Haftung der Fäden des Zugträgers 1 ergibt.

Die Ausführungsform nach Fig. 3 zeichnet sich ferner dadurch aus, dass auch das der Verbesserung der Quersteifigkeit dienende Fadengelege kein gewobenes bzw. gewirktes Textilelement ist, sondern aus einzelnen, parallelen, quer zur Längsrichtung des Prozessbandes angeordneten Monofilamenten 3b/3b' aus mit Epoxidharzen imprägnierten Aramidfasern bestehen.

Der wesentliche Vorteil der verschiedenen Ausführungsformen des erfindungsgemässen Prozessbandes liegt somit vor allem darin, dass hier die Zugbeanspruchung durch ein einziges Kettsystem übernommen wird. Durch diese Verwendung eines einzigen, die Zugbeanspruchung übernehmenden Gewebes wird ausserdem ermöglicht, dieses - und damit die neutrale Biegeebene - im Verbundkörper je nach Anwendungszweck optimal, d.h. mit hoher Genauigkeit, in einem ganz bestimmten Abstand zur Trommel anzuordnen. Die verfahrenstechnischen und funktionellen Vorteile kommen insbesondere in der einfacheren und präziseren Herstellung, in der geringeren Beanspruchung der Schichtenhaftung (Grenzflächen) und in einem genau definierbaren Spannungs- und Dehnungsverhalten sowie in der Verhinderung des Krimpeffekts zum Ausdruck.

Zur Erhöhung der Quersteifigkeit bzw. zur Sicherstellung der Flachlage des Prozessbandes wird, wie erwähnt, eine zusätzliche Funktionszone 3 aufgebaut, bestehend aus einem oder mehreren Dreher- bzw. Hybridgeweben, die ihrerseits praktisch keinen Zuganteil übernehmen. Zu diesem Zweck werden für die Kettfäden dieser Hybridgewebe niedrigmodulige gesponnene Garne [Polyamide (PA), Baumwolle] eingesetzt, während zur Erhöhung der Quersteifigkeit für die Schussfäden ein Garn mit hohem Elastizitätsmodul eingesetzt wird. Als Garne eignen sich hierfür besonders Monofilamente [Polyester (PES), Polyamide (PA), Polyphenylensulfid (PPS), aber auch mit Polyurethan (PUR), Epoxidharzen oder ähnlichen Materialien imprägnierte Multifilamente aus Glas, Polyester (PES), Polyamide (PA), Aramid und Carbon].

Gemäss einer Variante kann das Prozessband auch mit mehreren Drehergelegen der oben beschriebenen Art versehen werden, um die Quersteifigkeit zu erhöhen, ohne die Längsflexibilität wesentlich zu beeinträchtigen. Dies wurde anhand von Figur 2 beispielshalber beschrieben.

Die erwähnten Massnahmen haben ausserdem den Vorteil eines Verletzungsschutzes dank höherer Kerb- und Einstichfestigkeit. Zudem wird eine stärkere Verankerung von Metallhaken bei der Endverbindung bzw. bei Anwendung von Profilen und Bechern im Elevatorbereich gewährleistet.

Der beschriebene, materialmässig weniger aufwendige Verbundkörper wird in einem kostengünstigen Produktionsverfahren auf Präzisionskalandern in beliebigen Fabrikationslängen und -breiten mittels Polyurethan (PUR), Polyvinylchlorid (PVC), thermoplastischer Elastomere etc. gleichmässig beschichtet, wobei leitfähige Zwischenschichten mit niederem Widerstandswert eingebaut werden können, um eine elektrostatische Aufladung zu verhindern. Wird von dem Band beim Einsatz prozessbedingt die Deckschicht 4 aus einem Gummielastomer (NBR, XNBR, EPDM, Neopren etc.) verlangt, so kann der Bandkörper bestehend aus den Lagen 1, 2 und 3 als Zwischenprodukt verwendet werden. Die Deckschicht wird während des Vulkanisationsprozesses auf einer kontinuierlich arbeitenden Vulkanisationsanlage gleichzeitig durch ein entsprechendes Abdruckmedium mit dem gewünschten Abdruck versehen.

Der auf diese Weise hergestellte Verbundkörper kann daraufhin zu Prozessbändern beliebiger Länge und Breite verarbeitet werden, wobei deren Enden fingerförmig ausgestanzt und unter Druck und Wärme auch in der Maschine mit hoher Präzision verbunden werden können.

Dank der Trennung der Längs- und Querelemente lassen sich durch entsprechende Berechnungen die Spannungs-, Dehnungs- und Biegecharakteristik sowie die Quersteifigkeit auch unter Krafteinleitung mathematisch genau festlegen.

Dadurch können die dynamischen Betriebseigenschaften bzw. das kinetische Verhalten, wie geringer Dehnschlupf bei Beanspruchung durch Zugträger mit hohem Elastizitätsmodul, kurze Spannwege, geringe Scheibendurchmesser, hohe Bandgeschwindigkeit sowie Gleichförmigkeit optimal beeinflusst werden. Ferner lassen sich dank vorliegender Erfindung auch kleinere Scheibendurchmesser und höhere Laufzeiten erreichen, als bei mehrlagigen Transportbändern gleicher Dicke und Zugkraftklasse.

Die im Vergleich zu bekannten Prozessbändern überragenden Laufeigenschaften des erfindungsgemässen Prozessbandes konnten durch Vergleichsversuche bestimmt werden. Dabei wurde die in Fig. 5 schematisch angedeutete Prüfanordnung verwendet, gemäss welcher das zu testende Prozessband B zwischen einer angetriebenen Scheibe 5 und einer Spannscheibe 6 eingespannt ist. Die auf einem Untersatz 7 lose drehbar gelagerte Spannscheibe 6 wird durch ein Gewicht G, das an einem über die Rolle 8 geführten Seil 9 hängt, in Pfeilrichtung gespannt. Das vordere, dem Betrachter zugewandte Trum B' des endlosen Prozessbandes B ist ferner über mehrere lose drehbar gelagerte Umlenkrollen 10 geführt, die in relativ kurzen gegenseitigen Abständen angeordnet sind. Mit dem Antriebsmotor der angetriebenen Scheibe 5 ist ein Leistungsmesser P verbunden, der es gestattet, den Leistungsbedarf der Anordnung unter verschiedenen Betriebsbedingungen festzustellen, was wiederum auf die Längssteifigkeit des Prozessbandes B schliessen lässt. Da nämlich der Eigenenergieverbrauch eines Transportbandes bei Biegung in erster Linie eine Funktion der Längssteifigkeit, ferner aber auch der Dicke sowie des verwendeten Bandmateriales ist, lässt die Prüfanordnung nach Fig. 5 einen Vergleich der Biegearbeit des erfindungsgemässen Transportbandes mit derjenigen eines bekannten Bandes zu. Dieses bekannte Prozessband entspricht im wesentlichen dem Aufbau nach Fig. 1, wobei das Fadengelege 3 durch ein zweites zugtragendes Gewebe ersetzt ist.

Folgende Leistungswerte wurden gemessen:

|  | Bekanntes Band | $E_1$ | $E_2$ |
|---|---|---|---|
| Antriebsleistung (W) | 277 | 250 | 240 |
| Riemendicke (mm) | 2,0 | 2,0 | 2,0 |
| Spannung bei 1% Dehnung (N/mm) | 10 | 10 | 10 |

wobei $E_1$ und $E_2$ die mit zwei erfindungsgemässen Bändern nach Fig. 1 und 2 erzielten Werte bezeichnen.

Es zeigte sich, dass die Längssteifigkeit des erfindungsgemässen Prozessbandes eindeutig unter, die Quersteifigkeit desselben eindeutig über den entsprechenden Werten des bekannten Prozessbandes liegen. Es wurden mit einem Band gemäss Ausführung $E_1$ die folgenden Werte gemessen:

Biegesteifigkeit [mN·m]

| Dicke der Zwischenschicht | 0,5 mm | | 1,0 mm | | 1,5 mm | |
|---|---|---|---|---|---|---|
| | längs | quer | längs | quer | längs | quer |
| Bekanntes Band | 49 | 147 | 146 | 362 | 213 | 725 |
| Beispiel $E_1$ | 24 | 150 | 67 | 371 | 102 | 749 |

Der erfindungsgemäss ausgebildete Verbundkörper zeichnet sich ferner, wie die Versuche gezeigt haben, durch ein hervorragendes kinetisches Verhalten, insbesondere geringen Dehnungsschlupf bei hoher Beanspruchung, hohe Geschwindigkeiten und optimale Gleichförmigkeit aus.

**Patentansprüche**

1. Prozessband zum Einsatz als Förderband für die in einem Arbeitsprozess zu bewegenden Teile, dadurch gekennzeichnet, dass dasselbe im Hinblick auf die Erzielung optimaler Laufeigenschaften aus mehreren übereinander angeordneten Lagen (1 bis 4) mit jeweils lagenspezifischer Funktion besteht, und innerhalb des Lagenverbundes nur ein einziger Zugträger (1) vorhanden ist, der von einem der Verbesserung der Quersteifigkeit dienenden Fadengelege (3, 3') durch eine Zwischenlage (2, 2') getrennt ist, wobei sowohl die auf Zug beanspruchten Fäden (1a) des Zugträgers (1) als auch die quer zu den letzteren angeordneten Gelegefäden (3b) einen hohen Elastizitätsmodul zwischen 10 000 und 250 000 N/mm² aufweisen.

2. Prozessband nach Anspruch 1, dadurch gekennzeichnet, dass der textile Zugträger (1) ein gewobenes oder gewirktes textiles Zugband und das genannte Fadengelege (3, 3') ein Drehergelege (Fig. 4) mit mindestens der 2-fachen Maschenweite des textilen Zugbandes ist, wobei die in Längsrichtung des Prozessbandes verlaufenden Kettfäden (1a) des Zugbandes (1) und die quer dazu verlaufenden Schussfäden (3b, 3b') des Drehergeleges (3, 3') einen Elastizitätsmodul zwischen 10 000 und 250 000 N/mm² aufweisen und die bei Längsdehnung resultierende Kraft pro Breiteneinheit des Drehergeleges (3, 3') im Maximum 5% von derjenigen des Zugträgers (1) beträgt.

3. Prozessband nach einem der Ansprüche 1 oder 2, dadurch gekennzeichnet, dass der Zugträger (1) im Hinblick auf geringen Verschleiss und die Erzielung guter Gleiteigenschaften die dem Verschleiss unterworfene Laufseite des Prozessbandes bildet.

4. Prozessband nach einem der Ansprüche 1 oder 2, dadurch gekennzeichnet, dass der textile Zugträger (1) zentral innerhalb des Prozessbandes angeordnet ist und dass sich beidseits desselben symmetrisch Zwischenlagen (2, 2'), Fadengelege (3, 3') und Deckschichten (4, 4') anschliessen.

5. Prozessband nach Anspruch 1, dadurch gekennzeichnet, dass der textile Zugträger (1) ausschliesslich aus längsverlaufenden Zugkraftüberträgern (1c) besteht (Fig. 3).

6. Prozessband nach Anspruch 1 oder 5, dadurch gekennzeichnet, dass das zur Verbesserung der Querfestigkeit dienende Fadengelege (3, 3') ausschliesslich aus quer zur Längsrichtung des Prozessbandes verlaufenden Monofilamenten (3b) besteht, wobei die Zwischenlage (2, 2') mit einer die Aussenschicht des Prozessbandes bildenden Deckschicht (4, 4') eine homogene Masse bildet, in welche die vorgenannten Monofilamente (3b) eingebettet sind.

7. Prozessband nach Anspruch 5 und/oder 6, dadurch gekennzeichnet, dass der Zugträger (1) aus Carbonfasern (1c) besteht, deren Vorbehandlung mit dem Material der Zwischenlagen (2, 2') zwecks Erzielung einer ausgezeichneten Haftung abgestimmt ist, und dass ferner die Monofilamente des Fadengeleges (3b) aus mit Epoxidharzen imprägnierten Aramidfasern bestehen.

8. Verfahren zur Herstellung eines Prozessbandes nach Anspruch 1, dessen Deckschicht beim Einsatz prozessbedingt aus einem Gummielastomer bestehen soll, dadurch gekennzeichnet, dass das aus Zugträger, Zwischenlage und Gelege bestehende Prozessband als Zwischenprodukt vorfabriziert und die Deckschicht während des Vulkanisationsprozesses auf einer kontinuierlich arbeitenden Vulkanisieranlage gleichzeitig durch ein entsprechendes Abdruckmedium mit dem gewünschten Abdruck versehen wird.

FIG. 1

FIG. 2

FIG. 3

EP 0 489 694 A1

## FIG. 4

## FIG. 5

Europäisches
Patentamt

**EUROPÄISCHER RECHERCHENBERICHT**

Nummer der Anmeldung

| | **EINSCHLÄGIGE DOKUMENTE** | | EP 91810933.1 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
| X | US - A - 4 957 199 (WOKKE) * Fig. 1; Spalte 2, Zeilen 36-39 * -- | 1,4-6 | B 65 G 15/34 F 16 G 1/16 |
| X | DE - A - 2 557 025 (CONTINENTAL) * Fig. * -- | 1,4,6 | |
| A | DE - A - 2 557 025 * Anspruch 5 * -- | 7 | |
| X | DE - B - 1 808 935 (BTR) * Fig. 1 * -- | 1,4,6 | |
| X | DE - A - 2 339 478 (DUNLOP) * Fig. 1 * -- | 1,4,6 | RECHERCHIERTE SACHGEBIETE (Int. Cl 5) |
| X | DE - B - 2 425 465 (CLOUTH) * Fig. 2 * | 1,5 | B 65 G D 03 D F 16 G |
| A | * Anspruch 8 * -- | 2 | |
| X | DE - B - 2 301 769 (HARTMANN) * Fig. 2; Spalte 3, Zeilen 14-20 * -- | 1 | |
| D,A | EP - A - 0 380 971 (PARABEAM) * Fig. 2 * ---- | 1 | |

Der vorliegende Recherchenbericht wurde für alle Patentansprüche erstellt.

| Recherchenort | Abschlußdatum der Recherche | Prüfer |
|---|---|---|
| WIEN | 13-03-1992 | BAUMGARTNER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82